(19) Europäisches Patentamt
European Patent Office
Office européen des brevets

(11) **EP 3 723 157 A1**

(12) **EUROPEAN PATENT APPLICATION**

(43) Date of publication:
**14.10.2020 Bulletin 2020/42**

(51) Int Cl.:
*H01M 2/10 (2006.01)*          *B60K 1/04 (2019.01)*
*F01P 7/16 (2006.01)*          *F01P 9/06 (2006.01)*
*H01M 10/0525 (2010.01)*      *H01M 10/42 (2006.01)*
*H01M 10/48 (2006.01)*         *H01M 10/613 (2014.01)*
*H01M 10/615 (2014.01)*        *H01M 10/625 (2014.01)*
*H01M 10/643 (2014.01)*        *H01M 10/653 (2014.01)*
*H01M 10/6568 (2014.01)*      *H01M 10/663 (2014.01)*
*H01M 10/617 (2014.01)*

(21) Application number: 19176482.8

(22) Date of filing: 24.05.2019

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.04.2019 UA 201903672 U**

(71) Applicant: **Tsykhmistro, Oleksandr Sergiyovych 62459 Kharkiv oblast (UA)**

(72) Inventors:
• **TSYKHMISTRO, Oleksandr Sergiyovych 62459 Kharkiv oblast (UA)**
• **KUZMYCHOV, Ihor Kostiantynovych 61123 Kharkiv (UA)**

(74) Representative: **AOMB Polska Sp. z.o.o. Ul. Emilii Plater 53 21st Floor 00-113 Warsaw (PL)**

Remarks:
Claims 16-21 are deemed to be abandoned due to non-payment of the claims fee (Rule 45(3) EPC).

(54) **SECONDARY BATTERY**

(57) Battery is made in the form of at least one battery assembly installed in a sealed enclosure. The battery assembly consists of several battery modules. Each of the battery modules is made in the form of a metal sealed container designed in such a way that the battery cells installed in the latter, connected in series in parallel to each other, are cooled and/or heated by a liquid by a liquid cooling or heating system. In addition, the design of the battery module in the flow of inert gas and/or, if necessary, fire extinguishing powder in the channels (holes) between the positive and negative poles of the battery cells, provides a fire extinguishing system. The battery monitoring is carried out by the BMS monitoring and control system - microcontrollers that are responsible for the state of the battery modules and interact via the CAN-bus with the on-board computer of the vehicle.

Fig.1

EP 3 723 157 A1

**Description**

The utility model belongs to the electrotechnical industry and can be used in the development of stationary and traction batteries with increased operational life.

We will first define the terminology.

The battery element is called a cylindrical lithium ion battery in one of 18650, 20700 or 26650 standard sizes.

The battery module is a certain number of battery cells, connected in series-in parallel and placed in a single sealed housing. Depending on the intended purpose, it may contain different amounts of battery cells and, consequently, different power.

We will call the battery assembly several battery modules, which are connected in series - in parallel and which can be located in one plane, and one over another.

The rechargeable battery is a series of battery assemblies, interconnected in series, in parallel (see more details later).

Exploitation of the battery is mainly due to three physical factors: power, temperature and service life. The latter factor directly depends on the temperature regimes when charging and operating the battery. Powerful actions in the form of vibrations and mechanical shocks arise when using a battery in vehicles. The temperature problem is related to the conditions of use of the battery in different climatic zones. When operating the battery, the optimum operating temperature within the standard lithium-ion cells (18650 standard size), which ranges from 5 °C to 45 °C (https://best-energy.com.ua/support/chargers/bu-410?___utl___t=vbhttps://best-energy.com.ua/support/chargers/bu-410?_utl_t=vb). Increasing the temperature significantly reduces the life of the rechargeable battery. When stabilizing the temperature mode, the battery life can reach 15 years or more (https://hevcars.com.ua/akkumulyatoryi-bmw-rasschitanyi-na-ves-period-ekspluatatsii-elektromobilya/). In addition, since the discharge temperature depends on the temperature of the element, in the case of temperature distortions between the individual elements in the battery pack during discharge, unequal power output may be observed. Thus, it is not only about heating or cooling, but also about ensuring a stable operating temperature throughout the volume of the battery, regardless of the external conditions.

In the winter, when charging, it is necessary to remove the battery for heating. This is due to the fact that fast charging at low temperature leads to metallization of lithium inside the elements. This solid lithium coating, as a rule, causes irreversible loss of capacity. Under "low" can mean a different temperature inside the battery, depending on the chemical composition of the elements. For lithium-ion elements, it ranges from 0 °C to +5 °C (https://best-energy.com.ua/support/chargers/bu-410?_utl_t=vb). At ambient temperatures below 0 °C, charging lithium-ion batteries is not allowed at all. Therefore, in rechargeable batteries where there is a risk of lithium metallization, a quick charge simply turns off and becomes impossible at low temperatures. This is a disadvantage for all users of batteries, including electric car owners. Without the possibility of fast charging the owner of the electric vehicle will have to wait until the temperature of the elements does not rise to +5 °C. That is why it is necessary to begin the process of charge with small currents when its value in amperes does not exceed 10% (0,1) from the value of the battery capacity (C) in ampere-hours (0,1 C), which will be quite long. This problem is complicated by the fact that virtually all charging stations and most cars are located, as a rule, outdoors. Therefore, solving the problem associated with fast charging of lithium-ion batteries at low (0÷5) °C, and even more negative (<0 °C) air temperatures, will significantly improve the throughput of electric vehicle charging stations.

The problem of temperature stabilization within the working range becomes especially important for battery cells, in particular, the standard sizes 20700 and 26650, designed for servicing powerful units. For such elements, the removal of heat from the inner layers is very complicated. With prolonged discharges and powerful charges, the released heat builds up, and in the case of the latter, the internal pressure relief valve can work. This will result in the release of the battery part of the electrolyte, which is an aggressive medium for the cylindrical body of the elements. All this will affect the reduction of the capacity and increased physical degradation of their shells due to the oxidizing processes in which oxygen is involved.

Also, for the safe operation of the battery in the electric vehicle it is necessary to exclude the possibility of sparking. In the event of an accident, damage to the battery pack or, moreover, breakage of the battery pack is possible. This can cause fire and explosion. To save the life of the driver and passengers, the rechargeable battery must be equipped with a highly effective fire extinguishing system. However, to date, none of the batteries used in electric vehicles, such a system is not equipped.

From the state of the art, the system of passive air cooling of a storage battery is known (RU 2640572, Battery Charging Structure, ed. 10.01.2018), which combines a battery storage unit with cooling channels and avoids blocking the flow of cooling air due to blockage of the cooling channels or a hole for air inlet The cooling structure of the battery pack contains a plurality of cooling channels for drawing cool air into the battery pack unit, which are formed on the surface of the lid (yellow-marked phrases are directly taken from the patent number 2640572), which is attached to the battery pack, and also contains connecting channels, which connect a plurality of cooling channels to each other to provide the possibility of mutual exchange of cooling air, with the indicated channels formed in the direction, in common with a plurality of coolant s channels on the surface of the lid. In a hot climate, such a passive cooling system becomes ineffective. This is due to the fact that the air has poor thermal conductivity and therefore it will be difficult to remove excessive heat from the battery cells. In this regard, the most promising system of liquid cooling.

The most closely related technical solution is the US 2015/0077057 A1 patent application dated March 19, 2015, (hereinafter referred to as US 2015/0077057), which discloses how it is possible to quickly charge the battery pack at low temperatures, in particular the emphasis placed on installing a large number of temperature sensors in the rechargeable battery.

Maintenance of the temperature mode between the battery cells is provided by the controller, in particular, with a precision of about 0.01 °C, the temperature difference between the individual elements is recorded.

- Patent US 2015/0077057 specifies when charged with large currents, and when not. A fast charge includes a charge with currents when their values in amperes are equal to 100% (1) of the battery capacity (C) in amper hours (1C), or higher for a rechargeable battery using accumulator elements. Some battery cells are at risk of lithium ion at a rapid charge in low ambient temperatures. Moreover, this risk is a function of two parameters: temperature and charge state (hereinafter - SOC). The battery can be characterized by its charge profile, which is implemented in the charger and which binds the temperature and SOC with an optimized risk-free charge rate. Thus, for any particular set of critical parameters, under certain operating conditions, there is a very specific charge rate without risk. And this optimized charge rate represents the optimal charge current at each stage, which does not threaten the battery elements with a certain level of damage, such as lithium coating. This optimized risk-free charge is less than the high charge rate, and for some values of SOC and temperature it can be only 0.01 C, and at some air temperature values, the charge speed can be zero at all.

- Therefore, in order to implement the US Pat. No. 2015/0077057 way of recharging the battery, it is necessary to significantly increase the number of sensors that control the temperature in the battery modules, which will complicate the entire electronic circuitry of the battery and increase its cost.

- The existing cooling system (heating) used in the Tesla Motors storage batteries is disclosed in US Patent No. 2015/0111082 A1 dated April 23, 2014, (hereinafter - US 2015/0111082), namely in the form of a fluid belt line that covers a certain amount of outside rechargeable batteries. In this case, the system of fast charge at low ambient temperature (<5 °C) will not yield a significant gain in time, since the proposed system of heating (cooling) of battery cells is not effective.

- The technical task is based on the invention: by improving the cooling system (heating) of the battery cells and using the spark-ignition system made in the form of a closed circuit in which the inert gas and self-healing fuses circulate, provide:

  - increase of efficiency of the system of liquid cooling (heating);
  - rule out the appearance of sparks;
  - ensure fire extinguishing of the battery;
  - increase the life of the battery.

The problem is solved by the fact that the battery pack is made in the form of at least one battery assembly, which is located in a sealed housing, which is covered on the inside with a heat-insulating material.

The sealed housing also contains an emergency valve for relieving unnecessary internal pressure that may result from fire extinguishing and fire extinguishing in the battery case.

The battery assembly consists of several battery modules. Each of the battery modules is made in the form of a metal sealed container (hereinafter - the module container) in the upper and lower covers of which are coaxial openings. In these holes are inserted and sealed metal pipes, each of which is inserted perforated dielectric tube, openings (perforations) which are filled with a silicone conductive compound, and already in the middle of each dielectric cylinder insert the battery element. The top and bottom caps of the module container are covered by dielectric plates. In dielectric plates, openings are made, coaxial with holes in the top and bottom housings of the module container, but whose diameter is smaller than the diameter of the battery cells for fixing the battery cells in the module container. In the dielectric plates, metal contact plates are inserted, to which one contact of each fuse is welded. The second fuse pin is welded to the negative pole of each battery element. This design from above and from below is hermetically sealed with plastic covers. From the inside of the upper and lower covers are the channels for circulation of gas and extinguishing powder. These channels are located above each of the battery cells and are interconnected. At the ends (lateral surfaces) of the module container, metal pipes for supplying the thermoregulatory fluid are installed, and on the opposite end (the lateral surface) of the module container, metal pipes for its removal.

From one side of the plastic cover there are two tubes for supplying the inert gas and, if necessary, an extinguishing powder, while from the opposite side of the plastic cover there are, in the bottom of the embodiments, two nozzles for removing the inert gas into the silica gel blocks.

The battery elements of each battery module are interconnected in series to provide operating voltage and in parallel to provide operating current.

The battery contains the battery management system - microcontrollers, further - BMS-microcontrollers that are responsible for the state of the battery modules. They operate them in such a way as to maximize the performance of the battery in different conditions.

BMS-microcontrollers:

a) maintain the voltage on the battery cells of each battery module within a given range and perform general control over the battery life, as well as general control, which includes battery protection from: discharge; recharge; short circuit; overload current;

b) carry out constant monitoring of the heating of the battery cells through the digital temperature sensors installed in each battery module and installed at each module and assembly or in the battery module; they form and transmit to the central computer onboard the vehicle information and control signals about the state of the battery and system liquid cooling or heating of battery cases;

(c) constant monitoring of the speed of the liquid duct, which washes the lateral surface of the cylinders of each battery module in which the battery cells are installed.

Monitoring is carried out using a central vehicle on-board computer, which receives information on the CAN bus. If necessary, the control signal from the on-board computer through the controller enters the liquid pumps, which pump the thermoregulator to change the pump's impeller rotational speed.

The system of liquid cooling or heating provides the optimum operating temperature in all battery modules, and then in the battery assemblies of the battery in the range from+5 °C to+45 °C.

As noted earlier, all the battery modules contain nozzles for the input and output of the thermoregulatory fluid, the modules form assemblies, and their input and output connections are interconnected in parallel. Thus, the system of liquid cooling or heating is made in the form of a closed circuit and provides a temperature difference between modules less than 1 ° C. This is due to the fact that the battery modules and, respectively, the battery assemblies are spaced apart. Therefore, there may be a temperature difference of 1 °C between them. The system of liquid cooling (heating) allows the use of battery cells that withstand high load currents: 50A with short-time load of up to 5 sec; 100A for short-term load up to 1 sec (https://bestbattery.com.ua/li ion 1850/li ion 18650/imr 18650/samsung inr 18650 25r 2500 2 0a).

These characteristics are possible, since the system of liquid cooling or heating contains the following components: a liquid pump; heater of working fluid; valves, which ensure the flow of working fluid in the area of the heater; chiller; a system of valves that ensure the flow of the working fluid in the range of the chiller; temperature sensors; pipelines for the flow of working fluid in the system of ensuring optimal working temperature of the battery; a system of valves for controlling the supply of the working fluid through the inlet ports to the module container with the optimum operating temperature and drainage of the working fluid through the outlet from the container of the module for discharging into the zone of operation of the heater or in the range of the chiller; radiators with fans.

BMS-microcontrollers also provide temperature control in the zone of operation of the heater and the chiller in a proportional-integral-differential law (PID law; see. https://docplayer.ru/32614985-Pid-zakon-regulirovaniya-metody-nahozhdeniya-pid-koefficientov.html):

$$N = \frac{100}{K_p}\left(\Delta T + \frac{1}{K_i}\int_0^1 \Delta T dt - K_d \frac{dT}{dt}\right),$$

Where N is the power to be allocated by the heater, expressed as a percentage of its maximum power; $K_p$, $K_i$, $K_d$, - proportional, integral and differential adjustment coefficients accordingly (PID coefficients); $\Delta T = (T_{yc} - T_\Lambda)$, - difference between the temperature setpoint $T_{yc}$ and the measured temperature $T$. The addend in the steady state control is equal to the amount of thermal power required to compensate for heat losses at $\Delta T = 0$. The third component is proportional to the rate of temperature change with the opposite sign and should prevent sharp changes in the temperature of the object (differential component).

Proportional-integral-differentiating (PID) regulator is a device used in the cooling or heating system of a rechargeable battery equipped with a feedback link. The advantage of the regulator is the rapid exit to the regime, the exact maintenance of the given temperature of the thermoregulating fluid and a rapid reaction to its change within the specified limits. With the help of the PID regulator and digital temperature sensors, the fluid circuit controls are controlled and the CAN bus information is transmitted to the controller.

Each battery cell as an option is placed in a metal tube with a thickness of walls of 0.1÷2 mm, made of metal, or made of an alloy with the maximum possible in the manufacture of the last heat conductivity (hereinafter - the tube) and washed on the outer side surface thermoregulatory fluid. To prevent the battery from closing, when installing into the tube of the module container, a perforated dielectric tube, apertures (perforations) made in a dielectric tube, filled with a silicone conductive compound, are installed inside each tube. The use of the compound due to the fact that it is not combustible, further fixes the cylindrical elements in metal tubes and improves the thermal conductivity inside each tube. The thickness of the walls of dielectric tubes is selected, in one of the variants of execution in the range of 0,1÷2 mm. With this design, uniform temperature heating or cooling of all battery cells that are in each battery module is carried out. It also provides a stable temperature of the electrolyte inside each battery element.

For counteracting the occurrence of an electric spark and, as a consequence, an electric arc when connecting the battery elements into groups, self-healing fuses are used in the ceramic body, for example, polymer devices with a positive temperature coefficient of resistance, which is mounted on each battery element and is, in particular, a matrix of polymer that does not conduct current and mixed with carbon black. In a cold state, the polymer is in a crystalline state, and the space between the crystals is filled with carbon particles, the latter create many chains that conduct current.

Such a fuse is connected, in particular, welded to the negative pole of each battery element, and its second output is welded to the common metal plate of the serial-parallel connection of the battery cells in each battery module of the battery assembly.

The resistance of such a fuse in the exhaust state depends on the voltage supplied to the element $U$ and the dissipation of the power $P_d$.

Resistance $R_t$ of the self-repairing fuse is calculated by the formula:

$$R_t = U^2 / P_d$$

After disconnecting the battery from the load after some time, the internal resistance of the fuses decreases, which leads to their self-healing.

The battery is characterized by the fact that in order to prevent the occurrence of electric sparks it uses a system in the form of a closed circuit of circulation of inert gas (refers to the system of extinguishing a fire), which contains the following components: a cylinder with an inert gas under pressure; a valve that provides the supply of inert gas to a closed loop for extinguishing sparks; pressure gauge of inert gas in a closed circuit; membrane cylinders that provide the pressure of the inert gas in a closed circuit; valve membrane cylinders for regulating the pressure of inert gas in a closed circuit; silica gel blocks; sensors for controlling the degree of pollution of these units; air compressor and BMS-microcontrollers, which provide control of the modes of functioning of the components of the closed circuit of inert gas.

In order to counteract the emergence of a fire in emergency situations (as a result of accidents, etc.), a fire extinguishing system is installed in the battery, which operates at the first level of fire safety, or depending on the location of the possible localization of the accident.

The fire extinguishing system provides, firstly, the oxygen-free stay of the battery cells in the rechargeable battery. Inertia gas is fed into each battery module through the inlet ducts made from the inside of the upper and lower plastic hermetic crumbles propagated in the module housing through the channels made in the upper and lower hermetic plastic covers, contacts the positive and negative poles of the battery cells and through the output channels, made on the inside of the upper and lower plastic hermetic covers, extends through the silica gel filtration units of each module in the membrane pressure regulating cylinders inert gas.

It is known that an inert gas provides a complete stop of the oxidative processes on the end surfaces of the battery cells. Consequently, the presence of inert gas artificially creates the maximum allowable pressure inside the battery module between the sealed container and the plastic covers, which differs from the atmospheric pressure by $0.1 \div 0.5$ atm (experimentally installed).

Secondly, as a result of overheating of battery cells, the discharge of the electrolyte into channels made in the upper and lower hermetic plastic covers of the battery module can occur. In this case, in the channels made on the inside of the plastic hermetic lid of the module there is a reverse motion of the inert gas, that is, the droplets of the electrolyte and condensate settle in the silica gel filtration blocks, passing into the membrane blocks. Sensors installed in silica blocks control the degree of contamination of these units. The signal from them enters the controller.

Secondly, the fire extinguishing system is the final stage when the battery is damaged, when it loses its tightness. The contour of the fire extinguishing powder contains the following components: a cylinder with a fire extinguishing powder under pressure; a valve that delivers fire extinguishing powder to the battery assembly module, in which there is a sharp temperature rise or pressure drop of inert gas and filling the entire internal space of the module with exit to the damaged or fractured zone, emergency valve.

The essence of the invention explains the illustration.

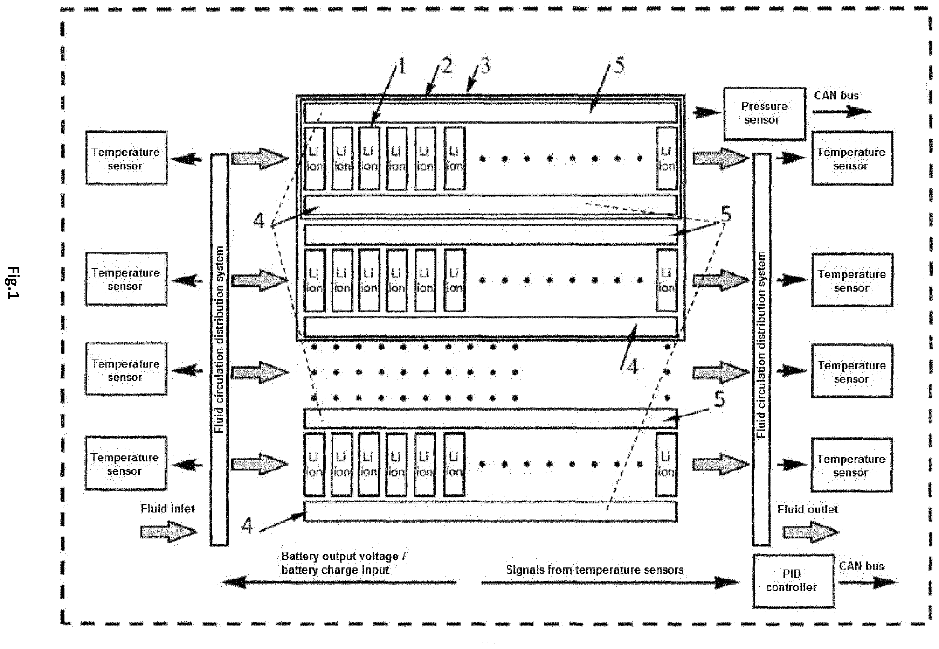

FIG. 1 shows a block diagram of a battery, which includes battery elements 1, battery modules 2, and battery assemblies 3. It also conventionally shows the main components (elements) of the cooling or heating systems 4 and the fire extinguishing 5 batteries, which are claimed.

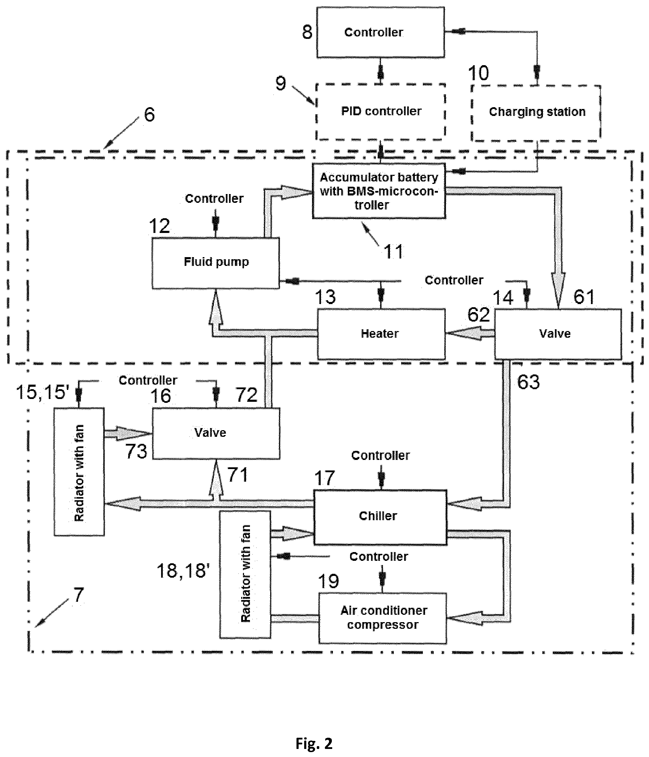

FIG. 2 shows the cooling or heating system of the battery, which includes a small 6 (indicated by a dash line) and a large 7 (indicated by a long double line d line) cooling or heating circuits with the main elements.

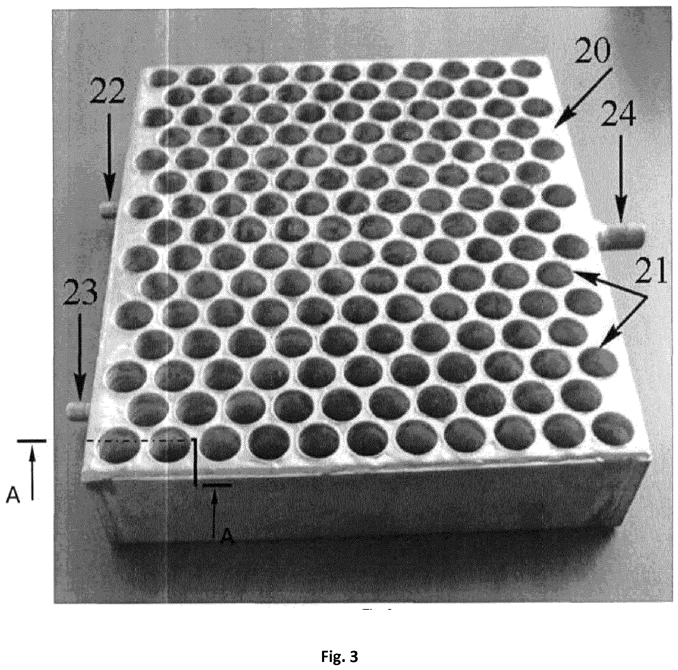

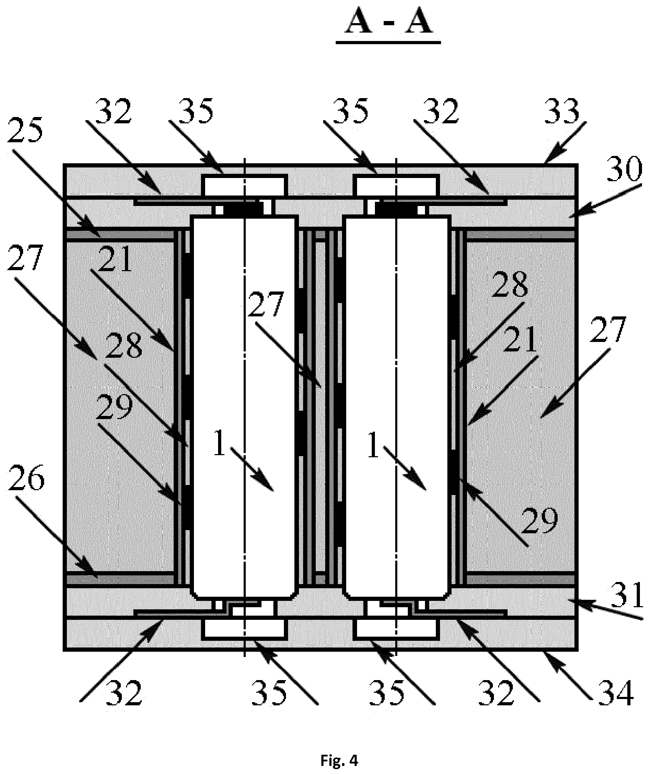

FIG. 3 shows a sealed container 20, which is the basis of each battery module 2 (hereinafter referred to as module 20 container), having through coaxial openings between the lower 26 and upper 25 covers (Fig. 4), and metal tubes 21 are fixed in the coaxial openings. side surfaces of the container) walls of the container module 20 fixed nozzles, while at one of the ends of the nozzle 22, 23 for the supply of liquid, and from the opposite end - nozzle 24 for removal of the already heated liquid, with a speed that depends on the ambient temperature food, that is for a large 7 or small 6 closed circuits for cooling or heating (Fig. 2).

FIG. 4 shows a section (A-A) of the container part of the module 20 (FIG. 3), namely: two battery cells 1, the top 25 and the bottom 26 metal covers of the container of the module 20; a cooling or heating fluid 27 washing the metal tubes 21 (FIG. 3); perforated dielectric tubes 28 are installed inside each tube, and the holes (perforations) of the tubes are filled with silicone heat-conducting compound 29 so that the entire inner surface of the perforated dielectric tubes 28 fits snugly to the surface of the battery 1. The upper 25 and lower 26 covers of the container of the module 20 are closed by the upper 30 and the bottom 31 dielectric plates, in each of which metal contact plates 32 are embedded, including for connection with battery cells mi 1 and channels (holes) (fig. 3) for the supply of gas and, if necessary, fire extinguishing powder from channels 35 (see below)).

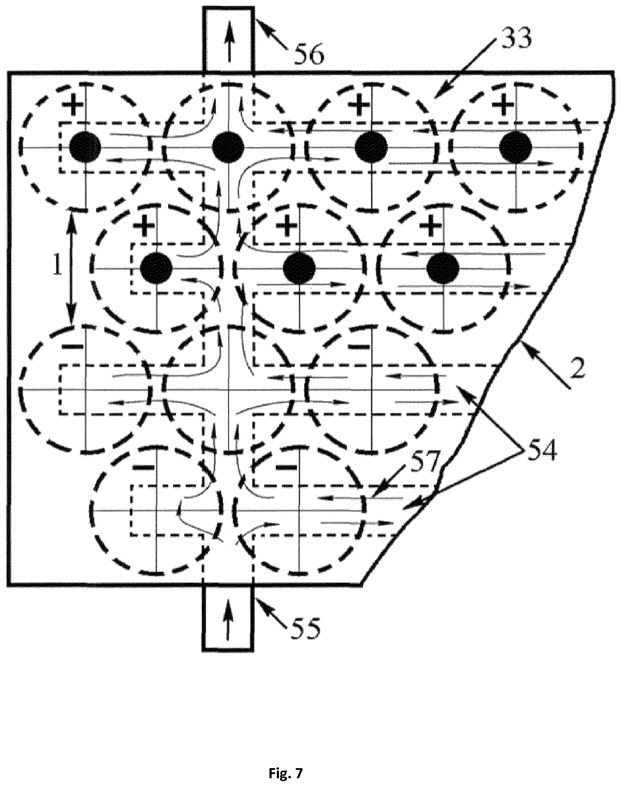

This structure is hermetically sealed at the top and bottom with plastic caps (33, 34). On the inside of the upper 33 and lower 34 plastic caps, the channels 35 are provided for the circulation of gas and, if necessary, fire extinguishing powder. These channels 35 are located above each row of battery cells 1 and interconnected (Fig. 7).

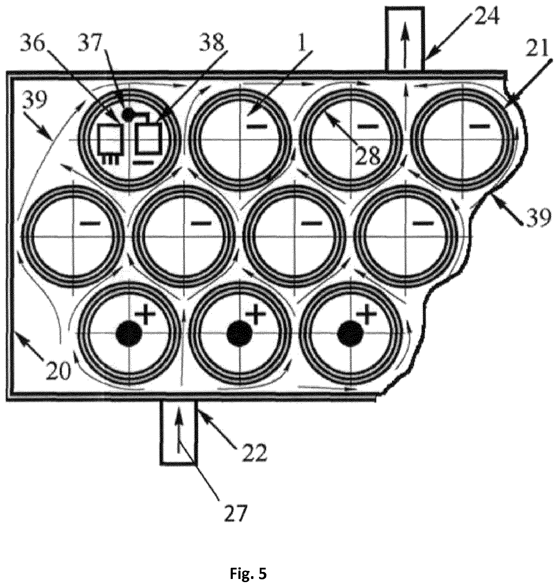

FIG. 5 is a top view of a portion of the container of the module 20 without the top cover 25 (FIG. 4).

Battery elements 1 are located in metal tubes 21 with internal dielectric tubes 28.

Also FIG. 5 shows the pipe 22 through which the cooling or heating fluid 27 is fed into the container of the module 20 (FIG. 3), and through the pipe 24 is removed for scraping along small 6 or large 7 closed cooling or heating circuits (FIG. 2).

The negative electrode of the battery cell 1 is connected, for example, by gluing a digital temperature sensor 36 and is attached, for example, by welding one with a vivod-37 self-shaped fuse in the ceramic case 38 (hereinafter - fuse 38).

In the module 20 module can be located from four digital temperature sensors 36, which are connected in parallel, and the signal from the terminals of one of the sensors 36 to fit the controller 8. The temperature sensors 36 themselves are located in the channels (orifices) of the dielectric plates 30 and 31 (Fig. 4) . The second terminal of the fuse 38 is welded to the metal contact plate 32. The fuses 38 are mounted on each battery cell 1. The fuses themselves are located in comparable grooves made in the dielectric plates 30 and 31 (not shown). It also shows the direction of movement 39 of the cooling or heating fluid 27.

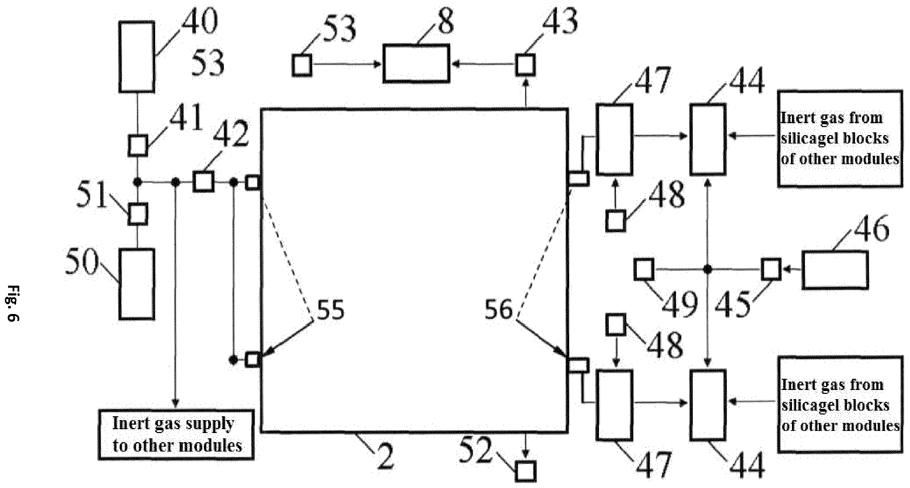

FIG. 6 shows the system of counteraction to the occurrence of electric sparks in the form of a closed circuit of circulation of an inert gas (hereinafter referred to as the system of counteraction). It refers to the fire safety system 5 (Fig. 1).

The countermeasure system includes: an inert gas cylinder 40; an inert gas supply valve 41 to all battery modules; an inert gas supply valve 42 to a specific module battery module 2, a controller 8; inert gas pressure sensor 43; membrane cylinders 44 for controlling the pressure of an inert gas 44; valves 45 membrane cylinders for regulating the pressure of an inert gas; compressor 46; silica gel blocks 47; sensors 48 control the degree of contamination of these blocks; valve 49 for relieving excess pressure.

Fire extinguishing system also applies to fire safety system 5 (Fig. 1). It contains a balloon with fire extinguishing powder 50; valve supply 51 fire extinguishing powder; battery module 2, controller 8; emergency valve 52 fire extinguishing powder; temperature sensor 53, which is installed inside the battery housing, in particular on its side wall for additional temperature control.

FIG. 7, a top view of a longitudinal section of a portion of the top plastic airtight cover 33 (FIG. 4).

In the plastic sealed cover 33 (FIG. 4), on the inside, channels are made in one embodiment in the form of rectangular grooves (54) for passing inert gas that enters the battery module 2 through the inlet 55 at the end (side) top plastic sealed cover. The second inlet 55 is located at the same end (side), and in the lower plastic sealed cover 34, similar grooves for an inert gas are made (not shown in Fig. 7).

Moving in the direction 57, the inert gas contacts with both positive and negative electrodes of the battery cells 1, and through the outlet 56, which is made on the opposite end (side) of the upper 33 and lower 34 (shown), the plastic hermetic seal enters the silica gel blocks 47 (FIG.. 6).

The system of liquid cooling or 4 batteries, works as follows: in the winter period of time, the battery is charged as follows.

The car connects to the charging station's socket 10, which, as a rule, are located along the autobahns, while data is being exchanged between the station and the car via CAN bus. After the battery voltage information and the magnitude of the charging current can be read by the charging station's computer 10, the liquid pump 12 is turned on to circulate the fluid in the cooling or heating system through the small loop 6 (Fig. 2) through a three-way valve 14 (outlets 61 , 62). This circuit includes: modules 2 (Fig. 1) of the battery 11; heater 13; liquid pump 12. Thus, the temperature is equalized between all of the battery modules 2 included in the collector 3 (Fig. 1) of the battery 11.

In the process of charging with large current, the battery cells 1 are heated and, as a result, the fluid in the cooling system is up to+45 °C. At this moment, the three-way valve 14 switches from the small circuit 6 to the large 7, which includes: 2 battery modules battery 11; three-way valve 14 (inlet 61, outlet 63) chiller 17; external radiator 15 with fan 15', which is a structural element of the car; a three-way valve 16 (inlet 73, outlet 72) a liquid pump 12 or a three-way valve 16 (inlet 71, outlet 72) and additional components of the vehicle's design compressor air conditioner 19 radiator with fan 18, which are connected in accordance with FIG. 2 (see below). The fan 15 is turned on and off by a command from the controller 8 to stabilize the temperature of the liquid. The controller 8 itself receives information from digital temperature sensors 36 from microcontrollers of the BMS monitoring and control system, a proportional-integral-differentiating (PID) controller (9), and digital temperature sensors 36 are installed in modules 2 (Fig. 5) of the battery 11. It should Note that the optimum temperature in the process of charging is from +5 °C to +45 °C.

In modern cars, the air conditioning system is reverse, i.e. Chiller can both cool and heat. When the ambient temperature changes from -5 °C to +5 °C, it is advisable to heat the battery using an air conditioner compressor 19. In this mode, a large circuit (the so-called alternative large circuit, previously mentioned) is turned on, which includes: battery 2 modules battery 11; three-way valve 14 (outputs 61, 63); chiller 17; radiator 18 with fan 18'; three-way valve 16 (outputs 71, 72); liquid pump 12. When this occurs, the chiller 17 is heated and, as a result, the thermostatic fluid itself. This is due to the fact that the compressor of the air conditioner 19 consumes significantly less energy than the heater 13 based on electric heating elements.

A separate+5 °C mode is used exclusively during the winter time and is a standby mode. When the car is in a disconnected from the charging station state 10, fluid flows along the small circuit 6, or the alternative mode described above can be used. It should be noted that the battery is a thermos, since the body of the battery is internally covered with insulating material (not shown), so the temperature is maintained in the battery at a constant temperature regardless of the ambient temperature.

In the summer period, the temperature of the battery is maintained in the range of 25 °C to+45 °C. A large amount of heat is removed from the battery element 1 during the fast charging process with the help of a liquid that flows in this case along a large circuit 7, which includes : modules 2 of the battery 11; three-way valve 14 (outputs 61, 63); chiller 17; air conditioning compressor 19; radiator with fan 18; radiator with fan 15; three-way valve 16 (outlets 73, 72) liquid pump 12.

The chiller is a plate heat exchanger in which liquid flows from one side and freon from the other.

The chiller contains a system that cools the fluid circulating in the battery, and heats the freon - this is the air conditioning compressor 19 of the high and low pressure tubes through which it flows. The heated freon falls on an external radiator with a fan 18 for cooling. The system also contains freon pressure sensors (not shown), temperature sensors on the chillers (not shown) and on the external radiator 15. At the moment of charging, all information from the sensors goes to the controller 8.

Separately, it should be noted that when the auto engine is moving, the grand circuit 7 for cooling the liquid through the three-way valve 16 (outlets 73, 72) connects an external radiator with a fan 15 to cool the liquid from the incoming air flow, hence thereby reducing the electricity consumption of the air conditioner compressor 19.

The inert gas circulation system uses the wave method of its movement. The process begins with the supply of gas from the cylinder 40 through the valve 41 to all of the battery modules 2 (Fig. 6). Before each module 2 is installed an additional valve 42.

The gas fills the entire inner space between the upper metal lid 25 of the container module 20 and the upper plastic lid 33, as well as between the lower metal lid 26 of the container module 20 and the lower plastic lid 34. The gas in the battery modules 2 is under pressure, slightly exceeding atmospheric (0, 1 ÷ 0.5 atm). On the other hand, there is an air compressor 46, which, through valve 45, pumps air into membrane cylinders 44 to a pressure that is slightly higher than atmospheric (0.1÷0.5 atm), which is monitored by a pressure sensor 43. Consequently, the gas pressure in each module and the pressure air in the membrane cylinders 44 will be the same. As a result, the membrane in each membrane cylinder will be at rest and its shape will not be curved (concave). When the valve is opened, 49 inert gas moves into the cylinders 44 and bends the membrane. The gas inside each module 2 is shifted into silica gel blocks 47. Sensors 48 monitor the degree of contamination of these blocks 47. Thus, module 2 is cleaned of condensate and electrolyte emissions. Further, at the command of the controller 8, the compressor 46 is turned on and the valve 45 is opened while the valve 49 is simultaneously closed. Air under pressure restores the state of the diaphragm, that is, the movement of the inert gas reversed, and the system checked the tightness and integrity of each battery module 2, each battery assembly 3 and the entire battery 11.

In the event of an accident, there is an instantaneous release of gas from the cavity of the damaged battery module, since the pressure inside is higher than atmospheric, followed by blowing it with an inert gas. This prevents the occurrence of fire or explosion.

As soon as the pressure sensor 43 of the inert gas (Fig. 6) detects the absence of pressure inside the module 2, or by using the temperature sensor 38, the temperature rise in module 2 is recorded, the fire extinguishing powder from the cylinder 50 is ejected through its supply valve 51 into the internal space of module 2. this prevents oxygen from entering inside the module and eliminates the possibility of fire. If the pressure on the battery modules 2 increases when the fire extinguishing powder is applied, then for its automatic discharging an emergency dump valve of the fire extinguishing powder 52 is included in the circuit.

We have manufactured a battery module, which contains a built-in balancer and a controller for controlling the flow of fluid (cooling or heating) with a circulation pump according to the law. It consisted of one sealed enclosure, the parameters of which were 17 V, 10 A. Climatic tests of the battery module were carried out at the National Scientific Center "Institute of Metrology" (42 Mironositskaya Str., Kharkiv, Ukraine, 61002) at a temperature of -40 ° C for three hours. All auxiliary devices, by means of which the temperature inside the module was controlled, were also inside the cooling chamber. These include: controller, electric teng, liquid pump. These devices were powered from the AC mains with a voltage of 220 V and a frequency of 50 Hz. Antifreeze was used as a liquid in the battery modules (-60 °C). During the experiment, it was found that the battery capacity of the module did not change. In addition, in the process of testing it was shown that negative temperature has practically no effect on the stable operation of the battery module.

A similar experiment was carried out at an ambient air temperature of +60 °C. Only in contrast to the previous case, an additional auxiliary device, a plate heat exchanger, was included in the general scheme. In its second circuit was Freon. At high temperatures, as well as at low temperatures, the battery module showed full performance.

As a next step, the charge of the module was investigated, which took place with an increase in the voltage on the battery cells from 2.8 V to 4.2 V. In these tests, a battery module with a capacity of 1.9 kW×h was used. The latter consisted of a single sealed unit, whose parameters 33.6 V (8×4.2 V), 57 A. The process of charging the module under study was carried out with a current of 300A. At the first stage, previously used cells were used in the frame size 18650 of 2013, produced by Panasonic with high internal resistance.

As a result of this experiment, the module was charged to 80% capacity in 20 minutes. In further experiments, new battery cells were used in the standard size 18650 of LG. The battery module was also charged from a battery voltage of 2.8 V to 4.2 V. As it turned out, in this case, it was possible to reduce the module charge time to 80% of capacity to 12 minutes. At the same time, the coolant temperature was ~ 32 °C. All of this was achieved thanks to a fundamentally new system of liquid cooling of the battery cells.

**Claims**

1. The battery pack has a hermetically sealed body with an inside surface covered with a heat-insulating material, with at least one battery assembly (3) consisting of several battery modules (2), each of the battery modules (2) made in the form of metal sealed container module (20) with
   through coaxial holes between the bottom (26) cover and the top (25) cover,
   in the end walls of the module container (20), the nozzles are fixed, at least one nozzle (22) for supplying a liquid and at least one nozzle for draining a liquid (24),
   moreover, metal tubes (21) are tightly fixed in coaxial holes, in each of which a perforated dielectric tube (28) is installed, the holes of which are filled with silicone heat-conducting compound (29), while a battery cell (1) is installed inside each dielectric tube (28), the latter are connected in series in parallel,
   and the upper (25) and lower (26) lids of the container module (20) are closed with the upper (30) and lower (31) dielectric plates, which have holes coaxially in the holes of the upper (25) and lower (26) lids of the container module (20), in addition, in the dielectric plates (30, 31), nested contact metal plates (32) are made with the possibility of spreading self-guided fuses (38) and digital temperature sensors (36), while one self-powered fuse is connected to the metal plates (32) (38), and the second contact is sam reset fuse (38) Attached to the negative pole of each battery cell (1), to which a digital temperature sensor (36) is also connected, which is connected to the microcontroller of the VMS monitoring and control system, with the container module (20) with dielectric plates (30.31) hermetically sealed top (33) and bottom (34) in accordance with plastic covers on the inner side have channels (35), which are connected to at least one (55) patron fixed on one side of the plastic cap (33,34) a shell for feeding an inert gas into the module or, if necessary, a fire extinguishing powder, and with at least one (56) pipe fixed on the opposite side of the plastic cover (33.34) to remove the inert gas; the inlet (22,23) and outlet (24) nozzles for the input and output of the thermostatic fluid of the battery modules (2), forming the assemblies (3) are interconnected in parallel.

2. The battery according to claim 1, **characterized in that** the nozzle (22) for the supply of fluid and the nozzle (24) for drainage of the already heated fluid are fixed from opposite ends.

3. The battery according to claims 1 or 2, **characterized in that** it contains solenoid valves to regulate the flow of working fluid through the nozzles..

4. The battery according to claim 1, **characterized in that** the diameter of the holes of the upper (30) and lower (31) dielectric plates such that the battery cells (1) are fixed in the container of the module (20).

5. The battery according to any one of the preceding claims 1 to 4, **characterized in that** the channels (35) from the inner top (33) and lower (34) sides of the plastic covers are formed above each row of battery cells (1) and interconnected.

6. The battery according to any one of the preceding claims 1 to 5, **characterized in that** between the pipe (22) for the supply of fluid and a pipe for draining fluid (24), a circuit is connected, including a three-way valve (14), a heater (13), a liquid pump (12).

7. The battery according to any one of the preceding claims 1 to 6, **characterized in that** between the pipe (22) for supplying a liquid and a pipe for draining liquid (24), a circuit is connected, including a three-way valve (14), a chiller (17), an external radiator with a fan (15), which is element of the design of the car, three-way valve (16), liquid pump 12.

8. The battery according to any one of the preceding claims 1 to 6, **characterized in that** between the pipe (22) for supplying a liquid and a pipe for draining liquid (24), a circuit is connected, including a three-way valve (14), chiller (17), radiator with a fan (18), three-way valve (16), liquid pump (12).

9. The battery according to any one of the preceding claims 1 to 6, **characterized in that** between the pipe (22) for the supply of fluid and a pipe for draining fluid (24), a circuit is connected, including a three-way valve (14), a chiller (17), an air conditioning compressor (19), radiator with fan (18), radiator with fan (15), three-way valve (16), liquid pump (12).

10. The battery according to any one of the preceding claims 1 to 6, **characterized in that** the inlet gas supply valve (42) is connected to the nozzle (55), which is connected to the circuit, which contains the inert gas supply valve (41) to all of the battery modules (2) and the inert gas cylinder (40).

11. The battery according to claim 10, **characterized in that** the valve (41) supply of inert gas to all battery modules (2) connected circuit containing valve supply (51) fire extinguishing powder and a balloon with fire extinguishing powder (50) under pressure.

12. The battery according to any one of the preceding claims 1 to 6, **characterized in that** the nozzle (56) is connected to a circuit that contains silica gel blocks (47) with sensors (48) for monitoring the degree of contamination, membrane cylinders (44) for controlling the pressure of an inert gas, valves (45) for membrane regulation cylinders inert gas pressure with valve (49) for relieving overpressure, compressor (46).

13. The battery according to claim 12, **characterized in that** in membrane cylinders (44) of controlling the pressure of an inert gas connecting silica gel blocks (47) with sensors (48) monitor the degree of contamination of other battery modules (20).

14. The battery according to any one of the preceding claims 1 to 13, **characterized in that** the modules (2) and accordingly the assemblies (3) are separated by a distance at which the temperature difference between them is set to not more than 1 °C.

15. The battery according to any one of the preceding claims 1 to 14, **characterized in that** the modules (2) and accordingly the assemblies (3) are separated by a distance at which the temperature difference between them is set to not more than 1 °C.

16. The battery according to any one of the preceding claims 1 to 15, **characterized in that** digital temperature sensors (36) are connected in parallel, and the signal from the terminals of one of the sensors (36) comes from the microcontroller of the VMS monitoring and control system to the proportional-integral-differentiating (PID) controller (9) and through CAN-buses to the controller (8) to control the liquid circuit modes.

17. The battery according to any one of the preceding claims 6 to 9 or 16, **characterized in that** the liquid pump (12) is controlled by the central on-board computer of the vehicle connected via the CAN bus.

18. The battery according to any one of the preceding claims 1 to 17, **characterized in that** the VMS microcontrollers are made with the ability to control the temperature in the zone of the heater and chiller according to the proportional-integral-differential law (PID law):

$$N = \frac{100}{K_p}\left(\Delta T + \frac{1}{K_i}\int_0^1 \Delta T dt - K_d\frac{dT}{dt}\right),$$

where N is the power to be allocated by the heater, expressed as a percentage of its maximum power; $K_p, K_i, K_d$, - proportional, integral and differential adjustment coefficients accordingly (for the coefficients); $\Delta T = (T_{yc} - T_\Delta)$, - difference of temperature setpoint $T_{yc}$ and measured value of temperature $T$; the second term in the constant mode of regulation is equal to the amount of thermal power required to compensate for heat losses at $\Delta T = 0$; the third component is proportional to the rate of change in temperature with the opposite sign and should prevent sharp changes in the temperature of the object (differential component).

19. The battery according to any one of the preceding claims 1 to 18, **characterized in that** the self-resetting fuse (38) in a ceramic package, for example, a polymer device with a positive temperature coefficient of resistance.

20. The battery according to claim 18, **characterized in that** the self-resetting fuse (38) in the ceramic case is installed on each battery cell (1) and are matrix with polymer, do not conduct current and mixed with carbon black.

21. The battery according to any one of the preceding claims 1 to 20, **characterized in that** the hermetic housing contains an emergency valve, which is made with the possibility of relieving excess internal pressure.

**Fig.1**

Fig. 2

Fig. 3

## A - A

Fig. 4

**Fig. 5**

Fig. 6

Fig. 7

Europäisches
Patentamt

European
Patent Office

Office européen
des brevets

# EUROPEAN SEARCH REPORT

Application Number

EP 19 17 6482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2017/005381 A1 (HARRIS W PORTER [US]) 5 January 2017 (2017-01-05) * page 2, paragraph 0020 - page 5, paragraph 0051; figures 1-9 * ----- | 1-15 | INV. H01M2/10 B60K1/04 F01P7/16 F01P9/06 |
| Y | CN 106 798 992 A (SHENZHEN HANLU NEW ENERGY AUTOMOBILE CO LTD) 6 June 2017 (2017-06-06) * page 3, paragraph 0001 - page 7, paragraph 0055; figures 2-5 * ----- | 1,2,4,5, 10-15 | H01M10/0525 H01M10/42 H01M10/48 H01M10/613 H01M10/615 H01M10/625 |
| Y | US 2014/038009 A1 (OKAWA HIDEAKI [JP] ET AL) 6 February 2014 (2014-02-06) * page 1, paragraph 0014 - page 21, paragraph 0342; figures 1-40 * ----- | 3,6-9 | H01M10/643 H01M10/653 H01M10/6568 H01M10/663 H01M10/617 |
| Y | US 2018/154782 A1 (LEE GUN GOO [KR]) 7 June 2018 (2018-06-07) * page 1, paragraph 0008 - page 7, paragraph 0066; figures 1-12 * ----- | 3,6-9 | |

TECHNICAL FIELDS
SEARCHED     (IPC)

H01M
B60L
F01P
B60K

The present search report has been drawn up for all claims

| Place of search | Date of completion of the search | Examiner |
|---|---|---|
| Munich | 1 July 2020 | Polisski, Sergej |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 19 17 6482

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☒ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**ANNEX TO THE EUROPEAN SEARCH REPORT
ON EUROPEAN PATENT APPLICATION NO.**

EP 19 17 6482

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2020

| Patent document cited in search report | | Publication date | Patent family member(s) | | Publication date |
|---|---|---|---|---|---|
| US 2017005381 | A1 | 05-01-2017 | CN | 107925015 A | 17-04-2018 |
| | | | US | 2017005381 A1 | 05-01-2017 |
| | | | WO | 2017003511 A1 | 05-01-2017 |
| CN 106798992 | A | 06-06-2017 | NONE | | |
| US 2014038009 | A1 | 06-02-2014 | CN | 103493285 A | 01-01-2014 |
| | | | DE | 112012001739 T5 | 30-01-2014 |
| | | | JP | 5644648 B2 | 24-12-2014 |
| | | | JP | 2012226895 A | 15-11-2012 |
| | | | US | 2014038009 A1 | 06-02-2014 |
| | | | WO | 2012144148 A1 | 26-10-2012 |
| US 2018154782 | A1 | 07-06-2018 | CN | 108134155 A | 08-06-2018 |
| | | | KR | 20180062637 A | 11-06-2018 |
| | | | US | 2018154782 A1 | 07-06-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2640572
- US 20150077057 A1
- US 20150077057 A
- US 20150111082 A1
- US 20150111082 A